# EUROPEAN PATENT APPLICATION

(11) **EP 4 730 132 A1**
(43) Date of publication of application: **22.04.2026**
(21) Application number: 25208363.9
(22) Date of filing: 13.10.2025
(51) Int. Cl.: G06F 9/54, G06N 5/04, G06N 20/00, G06F 16/242

(54) **AUTOMATIC APPLICATION PROGRAMMING INTERFACE CONSUMPTION AND INTEGRATION ACROSS THE SYSTEM LANDSCAPE VIA LARGE LANGUAGE MODELS**

(30) Priority: 18.10.2024 US 202418919926
(71) Applicant: SAP SE, 69190 Walldorf (DE)
(72) Inventor: Perera, Praharshana, Walldorf (DE); Straub, Hartmut, Walldorf (DE); Steinleitner, Marcel, Walldorf (DE)
(74) Representative: Müller-Boré & Partner Patentanwälte PartG mbB

(57) **Abstract**

A received query is parsed by a first machine learning (ML) model to retrieve one or more semantic entities. Next, a second ML model is trained with a list of application programming interfaces (APIs) and corresponding first data to generate a second trained ML model which receives the one or more semantic entities as inputs. Based on these inputs, the second trained ML model selects a given API from the list of APIs. Then, a third ML model is trained with the given API and corresponding second metadata to generate a third trained ML model. Next, the third trained ML model receives the one or more semantic entities as inputs and generates a given API call for invoking the given API. Then, the given API call is executed and the query is completed to a first computing system based on invoking the given API.

## Description

### TECHNICAL FIELD

The present disclosure generally relates to generating application programming interface calls on-the-fly and automating the integration between systems.

### BACKGROUND

An application can be hosted by a cloud platform such that the application can be remotely accessible to multiple tenants, for example, over the Internet. For example, the application can be available as a cloud-based service including, for example, a software as a service (SaaS) and/or the like. Many organizations rely on such cloud-based enterprise software applications including, for example, enterprise resource planning (ERP) software, customer relationship management (CRM) software, and/or the like. These enterprise software applications may provide a variety of functionalities including, for example, invoicing, procurement, payroll, time and attendance management, recruiting and onboarding, learning and development, performance and compensation, workforce planning, and/or the like.

In a cloud environment with multiple software applications, services often complete their task by invoking other services via application programming interfaces (APIs). Modular system landscapes cause significant API integration efforts, and end-to-end processes that span across the landscape require manual API implementation work. However, manual API implementation causes new and significant efforts for every use case.

### SUMMARY

In some implementations, a query received from a first computing device is parsed by a first trained machine learning (ML) model to retrieve one or more semantic entities. Next, a second ML model is trained with a list of application programming interfaces (APIs) and corresponding first data to generate a second trained ML model. Then, the one or more semantic entities are provided as inputs to the second trained ML model. Next, based on receiving the one or more semantic entities as inputs, the second trained ML model selects a given API from the list of APIs. Then, a third ML model is trained with the given API and corresponding second metadata to generate a third trained ML model. Next, the one or more semantic entities are provided as inputs to the third trained ML model to enable the third ML model to generate a given API call for invoking the given API. Then, the given API call is executed and the query is completed to a first computing system based on invoking the given API.

Non-transitory computer program products (i.e., physically embodied computer program products) are also described that store instructions, which when executed by one or more data processors of one or more computing systems, causes at least one data processor to perform operations herein. Similarly, computer systems are also described that may include one or more data processors and memory coupled to the one or more data processors. The memory may temporarily or permanently store instructions that cause at least one processor to perform one or more of the operations described herein. In addition, methods can be implemented by one or more data processors either within a single computing system or distributed among two or more computing systems. Such computing systems can be connected and can exchange data and/or commands or other instructions or the like via one or more connections, including a connection over a network (e.g., the Internet, a wireless wide area network, a local area network, a wide area network, a wired network, or the like), via a direct connection between one or more of the multiple computing systems, etc.

The details of one or more variations of the subject matter described herein are set forth in the accompanying drawings and the description below. Other features and advantages of the subject matter described herein will be apparent from the description and drawings, and from the claims.

### BRIEF DESCRIPTION OF THE DRAWINGS

The accompanying drawings, which are incorporated in and constitute a part of this specification, show certain aspects of the subject matter disclosed herein and, together with the description, help explain some of the principles associated with the disclosed implementations. In the drawings,
FIG. 1 illustrates a logical diagram of an example of a system, in accordance with some example implementations of the current subject matter;
FIG. 2 illustrates a logical block diagram of a computing system, in accordance with some example implementations of the current subject matter;
FIG. 3 illustrates a block diagram of a computing system, in accordance with some example implementations of the current subject matter;
FIG. 4 illustrates an example of a process for parsing a query to automatically generate an API call on-the-fly, in accordance with some example implementations of the current subject matter;
FIG. 5 illustrates an example of a process for training a LLM to generate an appropriate API call, in accordance with some example implementations of the current subject matter;
FIG. 6 illustrates an example of a process for generating an API call based on a received query, in accordance with some example implementations of the current subject matter;
FIG. 7 illustrates an example of a process for selecting an appropriate API and then generating an API call with the correct syntax based on a received query, in accordance with some example implementations of the current subject matter;
FIG. 8 illustrates a block diagram of an integration layer for generating API calls on-the-fly, in accordance with some example implementations of the current subject matter;
FIG. 9 illustrates a block diagram of a system for implementing one or more machine learning models is depicted, in accordance with some example implementations of the current subject matter;
FIG. 10A depicts an example of a system, in accordance with some example implementations of the current subject matter; and
FIG. 10B depicts another example of a system, in accordance with some example implementations of the current subject matter.

### DETAILED DESCRIPTION

The term application programming interface (API) may be defined as a set of rules or protocols that enables communication between different software applications or between different software components, with the communication allowing a first software application to exchange data, features, and functionality with a second software application and vice versa. In other words, an API enables two different software components to communicate by enabling a first software component to plug directly into the data and services of a second software component. The first and second software components may be part of the same computing system, or the first and second software components may be part of different computing systems. Business objects in various cloud systems are made accessible through APIs, which allow consumers to access and process the data associated with these objects. However, consuming these APIs requires some configuration effort. The goal of real-time API automation is to simplify the process of consuming these APIs.

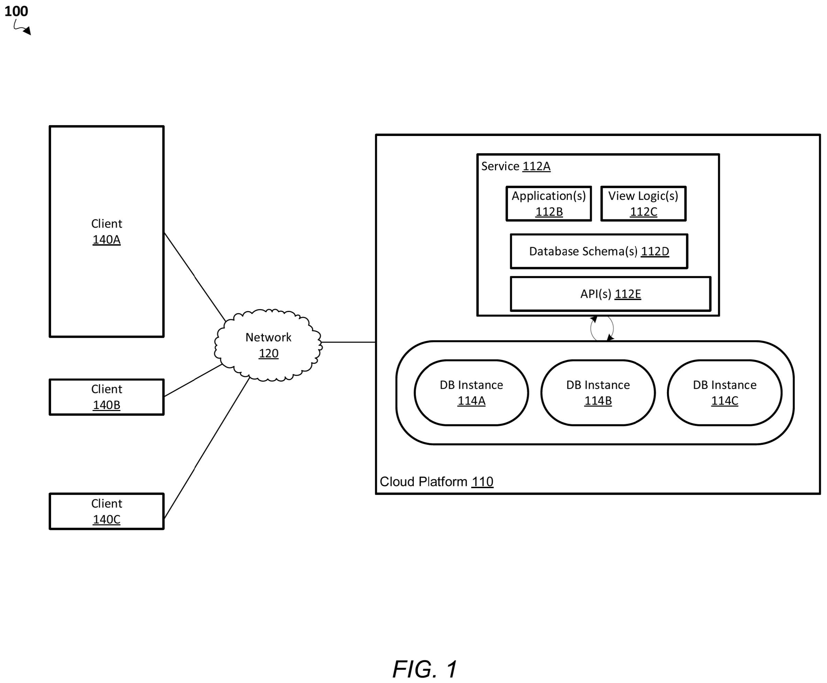

FIG. 1 depicts a diagram illustrating an example of a system 100 consistent with some implementations of the current subject matter. Referring to FIG. 1, the system 100 may include a cloud platform 110. The cloud platform 110 may provide resources that can be shared among a plurality of tenants. For example, the cloud platform 110 may be configured to provide a variety of services including, for example, software-as-a-service (SaaS), platform-as-a-service (PaaS), infrastructure as a service (IaaS), database as a service (DaaS), and/or the like, and these services can be accessed, via network 120, by one or more tenants of the cloud platform 110. Network 120 may be any wired and/or wireless network including, for example, a public land mobile network (PLMN), a wide area network (WAN), a local area network (LAN), a virtual local area network (VLAN), the Internet, and/or the like.

In the example of FIG. 1, the system 100 includes a first tenant 140A (labeled client), a second tenant 140B, and a third tenant 140C, although cloud platform 110 may have other quantities of tenants. The clients may each comprise a user device (e.g., a computer including an application such as a browser or other type of application). The user device may be a processor-based device including, for example, a smartphone, a tablet computer, a wearable apparatus, a virtual assistant, an Internet-of-Things (IoT) appliance, and/or the like. Each client may access, via network 120, at least one of the services at the cloud platform 110. In some implementations, each of the tenants 140A-C represents a separate tenant at the cloud platform 110, such that a tenant's data is not shared with other tenants (absent permission from a tenant). Alternatively, each of the tenants 140A-C may represent a single tenant at the cloud platform 110, such that the tenants do share a portion of the tenant's data, for example.

The cloud platform 110 may include resources, such as at least one computer (e.g., a server), data storage, and a network (including network equipment) that couples the computer(s) and storage. The cloud platform may also include other resources, such as operating systems, hypervisors, and/or other resources, to virtualize physical resources (e.g., via virtual machines), provide deployment (e.g., via containers) of applications (which provide services, for example, on the cloud platform, and other resources). In the case of a "public" cloud platform, the services may be provided on-demand to a client, or tenant, via the Internet. For example, the resources at the public cloud platform may be operated and/or owned by a cloud service provider (e.g., Amazon Web Services, Azure, etc.), such that the physical resources at the cloud service provider can be shared by a plurality of tenants. Alternatively, or additionally, the cloud platform may be a "private" cloud platform, in which case the resources of the cloud platform may be hosted on an entity's own private servers (e.g., dedicated corporate servers operated and/or owned by the entity). Alternatively, or additionally, the cloud platform may be considered a "hybrid" cloud platform, which includes a combination of on-premises resources as well as resources hosted by a public or private cloud platform. For example, a hybrid cloud service may include web servers running in a public cloud while application servers and/or databases are hosted on premise (e.g., at an area controlled or operated by the entity, such as a corporate entity).

In the example of FIG. 1, the cloud platform 110 includes a service 112A, which is provided to the client 140A. This service 112A may be deployed via a container, which provides a package or bundle of software, libraries, configuration data to enable the cloud platform to deploy during runtime the service 112A to, for example, one or more virtual machines that provide the service at the cloud platform. In the example of FIG. 1, the service 112A is deployed during runtime, and provides at least one application such as an application 112B (which is the runtime application providing the service at 112A and served to the client 140A). To illustrate further, client 140A may access the application 112B to view data and/or query data stored in a database instance 114A, for example.

The service 112A may also provide view logic 112C. The view logic (also referred to as a view layer) links the application 112B to the data in the database instance 114A, such that a view of certain data in the database instances is generated for the application 112B. For example, the view logic may include, or access, a database schema 112D for database instance 114A in order to access at least a portion of at least one table at the database instance 114A (e.g., generate a view of a specific set of rows and/or columns of a database table or tables). In other words, the view logic 112C may include instructions (e.g., rules, definitions, code, script, and/or the like) that can define how to handle the access to the database instance and retrieve the desired data from the database instance.

The service 112A may include the database schema 112D. The database schema 112D may be a data structure that defines how data is stored in the database instance 114A. For example, the database schema may define the database objects that are stored in the database instance 114A. The view logic 112C may provide an abstraction layer between the database layer (which include the database instances 114A-C, also referred to more simply as databases) and the application layer, such as application 112B, which in this example is a multitenant application at the cloud platform 110.

The service 112A may also include an application programming interface (API) 112E to the database layer, such as the database instance 114A and the like. The API 112E may be implemented as an Open Data Protocol (OData) interface (e.g., HTTP message may be used to create a query to a resource identified via a URI), although the API 112E may be implemented with other types of protocols including those in accordance with REST (Representational state transfer). In the example of FIG. 1, the database instance 114A may be accessed as a service at a cloud platform, which may be the same or different platform from cloud platform 110. In the case of REST compliant interfaces, the API 112E may provide a uniform interface that decouples the client and server, is stateless (e.g., a request includes all information needed to process and respond to the request), cacheable at the client side or the server side, and the like. More details for accessing various services, layers, applications, and/or objects via the API(s) 112E will be provided later on in this disclosure.

The database instances 114A-C may each correspond to a runtime instance of a database management system (also referred to as a database). One or more of the database instances may be implemented as an in-memory database (in which most, if not all, the data, such as transactional data, is stored in main memory). In the example of FIG. 1, the database instances are deployed as a service, such as a DaaS, at the cloud platform 110. Although the database instances are depicted at the same cloud platform 110, one or more of the database instances may be hosted on another or separate platform (e.g., on-premise) and/or another cloud platform.

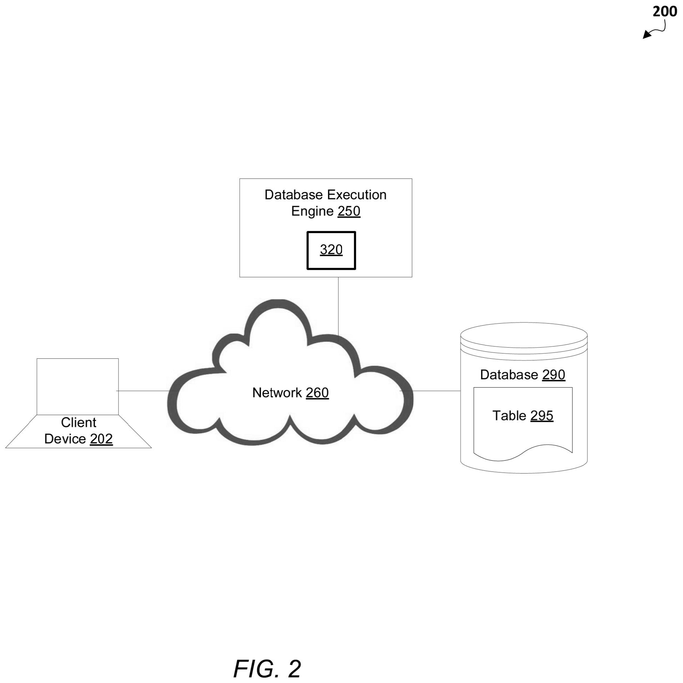

Turning now to FIG. 2, a system diagram illustrating an example of a database system 200 is shown, in accordance with one or more embodiments of the current subject matter. Referring to FIG. 2, the database system 200 may include one or more client devices 202, a database execution engine 250, and one or more databases 290. As shown in FIG. 2, the one or more client devices 202, the database execution engine 250, and the one or more databases 290 may be communicatively coupled via a network 260. The one or more databases 290 may include a variety of relational databases including, for example, an in-memory database, a column-based database, a row-based database, and/or the like. The database execution engine 250 may store a database table 295 at the one or more databases 290, with the database table 295 representative of any number and type of tables.

In some example embodiments, the one or more databases 290 may include a relational database. However, it should be appreciated that the one or more databases 290 may include any type of database including, for example, an in-memory database, a hierarchical database, an object database, an object-relational database, and/or the like. For example, instead of and/or in addition to including a relational database, the one or more databases 290 may include a graph database, a column store, a key-value store, a document store, and/or the like.

The one or more client devices 202 may include processor-based devices including, for example, a mobile device, a wearable apparatus, a personal computer, a workstation, an Internet-of-Things (IoT) appliance, and/or the like. The network 260 may be a wired network and/or wireless network including, for example, a public land mobile network (PLMN), a local area network (LAN), a virtual local area network (VLAN), a wide area network (WAN), the Internet, and/or the like.

To illustrate by way of an example, a given client device 202 may send a query via the database execution engine 250 to the database layer including the one or more databases 290, which may represent a persistence and/or storage layer where database tables may be stored and/or queried. Furthermore, the database execution engine 250 may provide the ability to access table storage via an abstract interface to a table adapter, which may reduce dependencies on specific types of storage and persistence layers, which may in turn enable use with different types of storage and persistence layers.

The database execution engine 250 may be configured to handle different types of databases and the corresponding persistent layers and/or tables therein. The database execution engine 250 may perform operations including rule-based operations, such as joins and projections, as well as filtering, group by, multidimensional analysis, and/or the like in such a manner so as to reduce the processing burden on the database layer. In this way, the database execution engine 250 may execute these and other complex operations, while the one or more databases 290 can perform simpler operations to reduce the processing burden at the one or more databases 290.

In an example, database execution engine 250 includes large language model (LLM) integration layer 320 for dynamically generating API calls to fulfill various queries generated by client device 202. In another example, LLM integration layer 320 is implemented separately from database execution engine 250. For example, in another embodiment, LLM integration layer 320 is implemented as part of a cloud platform. In a further embodiment, LLM integration layer 320 is implemented as part of a business technology platform (BTP). Other ways of implementing LLM integration layer 320 are possible and are contemplated. More details on the operation of LLM integration layer 320 will be provided throughout the remainder of this disclosure.

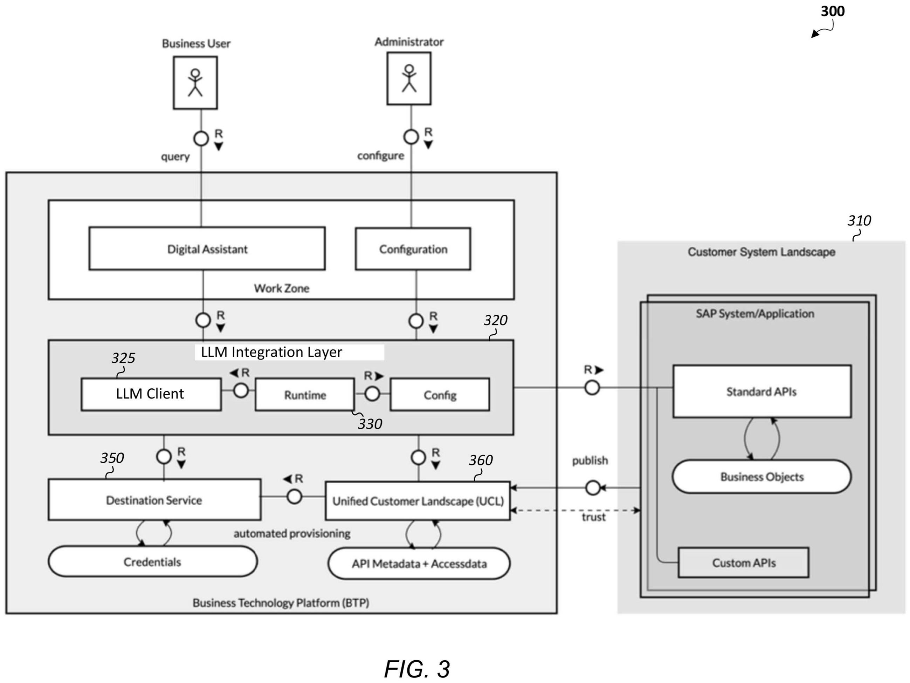

Referring now to FIG. 3, a diagram of a computing system 300 is shown, in accordance with one or more embodiments of the current subject matter. In an example, computing system may include a technology platform (e.g., business technology platform) and a customer system landscape 310. Within the technology platform, a large language model (LLM) integration layer 320 may be implemented. The LLM integration layer 320 registers all exposed APIs and enables a LLM to access a system's data via secure channels. The LLM integration layer 320 minimizes the development efforts for developers, and the enablement of a LLM can be handled via feature flags that are set during publishing to the API business hub, which is a registry known in the customer system landscape 310. The LLM integration layer 320 serves as the foundation to build digital assistants and to implement new business processes on the fly. In general, the LLM integration layer 320 enables users to interact with a LLM model and to query data from one or more computing systems and/or database systems. Although some of the examples herein refer to the use of a LLM, other types of machine learning (ML) models, such as generative pre-trained transformers, neural networks, Generative Adversarial Networks (GANs) and/or the like may be trained and used as well.

The LLM integration layer 320 includes a LLM client 325 which abstracts the communication with a LLM (e.g., ChatGPT). The communication from the LLM integration layer 320 to the LLM goes through the LLM client 325. The LLM client 325 guarantees secure and controlled communication with the LLM. The LLM integration layer 320 also includes a runtime component 330 which orchestrates the communication with the LLM and the backend system. The runtime component 330 delegates user queries to the LLM client 325, adding additional metadata to enrich the queries. In this manner, the LLM integration layer 320 can provide a stable LLM-agnostic interface to digital assistants or Chatbot interfaces.

In an example, the runtime component 330 requests for the LLM to generate API calls for a specific business object based on the identified entities. The generated API calls will be evaluated and pre-processed by the runtime component 330. The runtime component 330 handles communication with the cloud system, establishing a secure communication channel via the destination service 350. The runtime component 330 ensures that the LLM does not interact directly with the cloud system. The runtime component 330 leverages API metadata and access strategies provided by the unified customer landscape (UCL) 360 to route the calls to the correct endpoints.

The UCL 360 discovers, manages, configures, and connects different systems throughout the entire lifecycle of a related business process. The UCL 360 can also act as an orchestrator within this context. The UCL 360 is aware of system instances and can represent the view of an actual customer system landscape. By utilizing the discovered system instances and API resources, the UCL 360 enables the establishment of trust and explicit integration between them. The UCL 360 abstracts the specific details of the customer system landscape 310 from the LLM integration layer 320, allowing the LLM integration layer 320 to delegate the handling of system-specific information, such as API access details, metadata, and authentication, to the UCL 360.

Destinations required to access APIs, including endpoints and credentials, will be automatically provisioned, leveraging the information available in the UCL 360. Some applications may enable customers to non-disruptively extend the standard APIs provided by the service provider to adapt to the individual needs of the customers. The custom APIs that have been published are also made available through UCL 360, allowing the APIs to easily be consumed via the simplified automation layer. Digital assistants are the end user facing components in the architecture. The digital assistants can be embedded into a portal environment like WorkZone, allowing users to input text-based queries to fetch data from and trigger actions from the cloud system. The configuration client serves as the design-time user interface (UI) for an administrator at a customer. An administrator can curate the configuration needed to support the business requirements of the end users. In the configuration UI, an administrator selects and activates the APIs and configures necessary user authentication and authorization to access the backend APIs.

In an example, a LLM (e.g., ChatGPT) is trained to understand the semantics of the APIs of a given system platform. Depending on the embodiment, various approaches may be implemented to incorporate additional data and create a version tailored to the needs of the APIs. The integration layer 320 may use in-context learning and fine-tuning of the LLM model, an additional capability offered by LLMs. In-context learning, also known as prompt engineering, extends text input to the generative pre-trained transformer (GPT) model (the machine learning model that underlies a LLM) to guide results in the right direction. This additional context can significantly improve results. Another way to add information about the domain of the API is to fine-tune the GPT models directly. Fine-tuning improves performance further by training the model with many more examples than can fit in the prompt. Once a model is fine-tuned, examples no longer need to be specified in the prompt. To keep the information up to date and include new APIs, this process may be repeated on a regular basis.

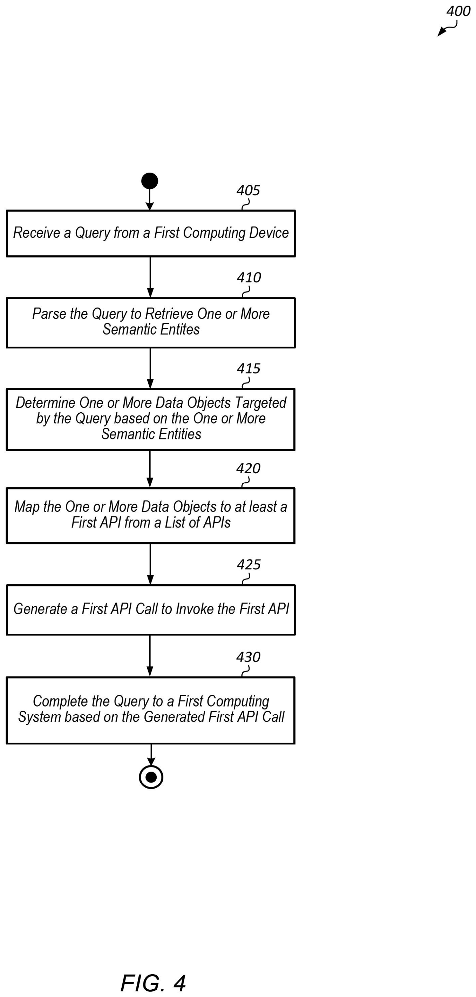

Turning now to FIG. 4, a process for parsing a query to automatically generate an API call on-the-fly is depicted, in accordance with one or more embodiments of the current subject matter. A software application receives a query from a first computing device (block 405). Next, the software application parses the query to retrieve one or more semantic entities from the query (block 410). In an example, the software application utilizes a LLM to parse the query to retrieve the one or more semantic entities from the query. It is noted that the one or more semantic entities may also be referred to as the "intent" of the query. Then, the software application determines one or more data objects targeted by the query based on the one or more semantic entities (block 415).

Next, the software application maps the one or more data objects to at least a first API from a list of APIs (block 420). In an example, the software application utilizes a machine learning model to map the one or more data objects to at least the first API from the list of APIs. The list of APIs refers to published APIs and/or activated APIs for one or more systems (e.g., CRM system, ERP system) of a customer system landscape (e.g., customer system landscape 310 of FIG. 3). In an example, the software application utilizes the metadata associated with the list of APIs to map the one or more data objects to at least the first API from a list of APIs. The metadata may be in the form of a JSON or XML document, with the metadata for each API including a description of the entity, the endpoints, the operations, and the semantics of the respective API. Then, the software application generates a first API call to invoke the first API (block 425). Next, the software application completes the query to a first computing system based on the generated first API call (block 430). In an example, block 430 may be implemented by having a runtime component (e.g., runtime component 330 of FIG. 3) validate the semantical correctness of a retrieved response to the first API call, with the runtime component returning the result to the client which initiated the query. After block 430, method 400 may end.

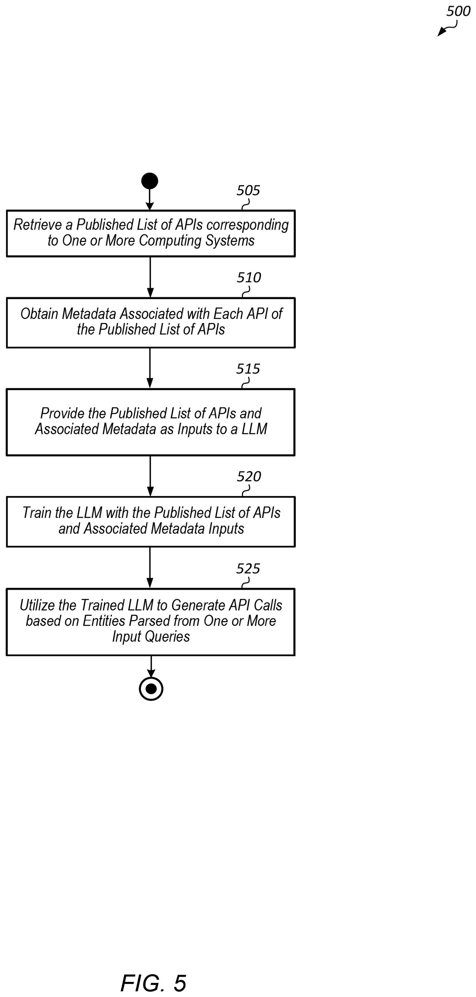

Referring now to FIG. 5, a process for training a LLM to generate an appropriate API call is depicted, in accordance with one or more embodiments of the current subject matter. A software application (e.g., application 112B of FIG. 1) retrieves a published list of APIs corresponding to one or more computing systems (block 505). Also, the software application obtains metadata associated with each API of the published list of APIs (block 510). The metadata for a given API defines the semantics, entities, endpoints, and operations of the given API. Next, the software application provides the published list of APIs and associated metadata as inputs to a LLM (block 515).

Then, the software application trains the LLM with the published list of APIs and associated metadata inputs (block 520). Next, the software application utilizes the trained LLM to generate API calls based on entities parsed from one or more input queries (block 525). After block 525, method 500 may end.

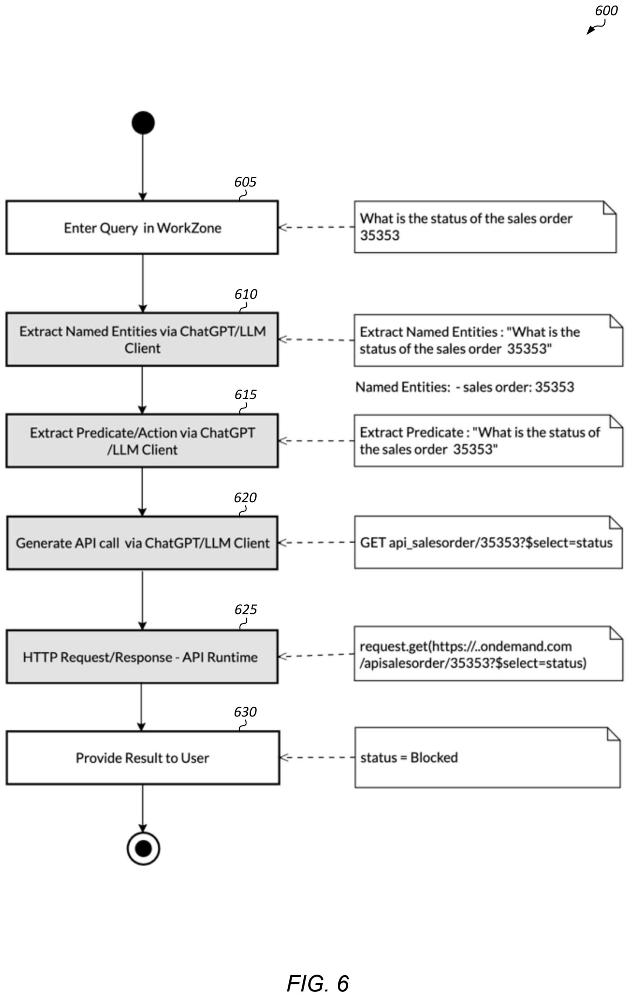

Turning now to FIG. 6, a process for generating an API call based on a received query is depicted, in accordance with one or more embodiments of the current subject matter. A client enters a query in a first software application (e.g., WorkZone) (block 605). To the right of block 605, one example of a query is shown, with this example being "What is the status of sales order 35353". Next, an integration layer (e.g., LLM integration layer 320 of FIG. 3) of the first software application extracts named entities via a LLM client (block 610). To the right of block 610, the earlier example is shown, with the named entities being "sales order" and "35353" for this example. Then, the integration layer extracts a predicate from the query based on the named entities via the LLM client (block 615). It is noted that the terms "predicate" and "action" may be used interchangeably herein.

Next, the integration layer generates an API call via the LLM client based on the extracted predicate (block 620). To the right of block 620, an example API call is shown as "GET api_salesorder/35353?$select=status". In this example, the LLM client determines the appropriate API call to invoke and then inserts the extracted entity "35353" into the API call according to how the format of the API call is defined. Then, the integration layer invokes the generated API call via a runtime component (block 625). In the example to the right of block 625, a Hypertext Transfer Protocol (HTTP) request is generated and sent to the destination system, and a response by the destination system to the HTTP request may be received by the runtime component. Next, the integration layer provides a result to the client based on the data returned from the generated API call (block 630). In an example, a destination service (e.g., destination service 350 of FIG. 3) may determine whether the client has authorization to view the result returned by the generated API call. In the example shown to the right of block 630, the status is blocked as the user does not have authorization to view the status of the particular sales order. However, if the user does have authorization, the result of the generated API call may be provided to the user, for example via one or more graphical elements rendered and displayed within a user interface (UI) of a computing device. After block 630, method 600 may end.

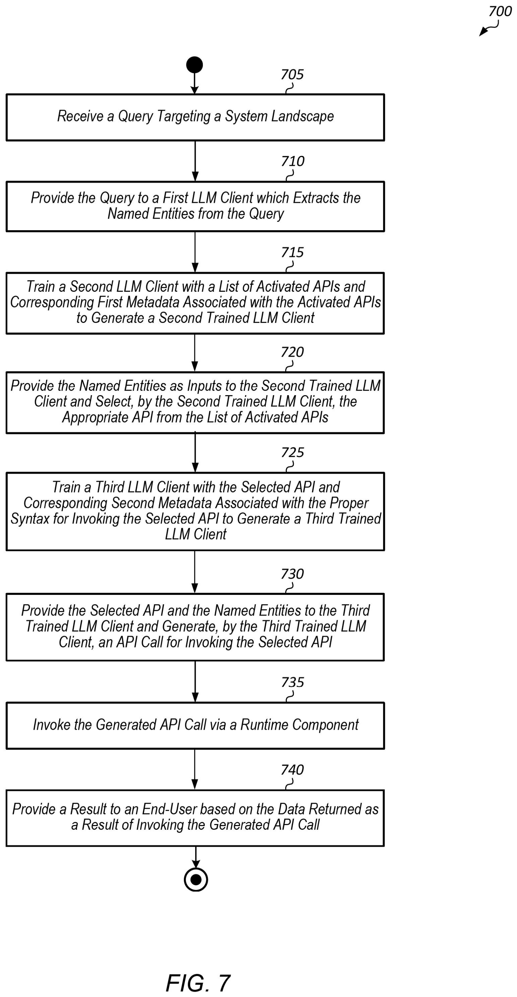

Referring now to FIG. 7, a process for selecting an appropriate API and then generating an API call with the correct syntax based on a received query is depicted, in accordance with one or more embodiments of the current subject matter. An integration layer (e.g., integration layer 320 of FIG. 3) receives a query targeting a system landscape (e.g., system landscape 310 of FIG. 3) (block 705). Next, the integration layer provides the query to a first LLM client which extracts the named entities from the query (block 710). It is noted that the terms "LLM client" and "LLM" may be used interchangeably herein. It is also noted that a LLM may be referred to more generally herein as a machine learning (ML) model.

Then, the integration layer trains a second LLM client with a list of activated APIs and corresponding first metadata associated with the activated APIs to generate a second trained LLM client (block 715). It is noted that depending on the embodiment, the training in block 715 may occur before the query is received in block 705 or the training in block 715 may occur in response to the query being received. Next, the integration layer provides the named entities as inputs to the second trained LLM client and the second trained LLM client selects the appropriate API from the list of activated APIs (block 720). Then, the integration layer trains a third LLM client with the selected API and corresponding second metadata associated with the proper syntax for invoking the selected API to generate a third trained LLM client (block 725). The training in block 725 may occur prior to receiving the query in block 705 or in response to the second trained LLM client selects the appropriate API in block 720.

Next, the integration layer provides the selected API and the named entities to the third trained LLM client and the third trained LLM client generates an API call for invoking the selected API (block 730). Then, the integration layer invokes the generated API call via a runtime component (e.g., runtime component 330 of FIG. 3) (block 735). Next, the integration layer provides a result to an end-user based on the data returned as a result of invoking the generated API call (block 740). After block 740, method 700 may end.

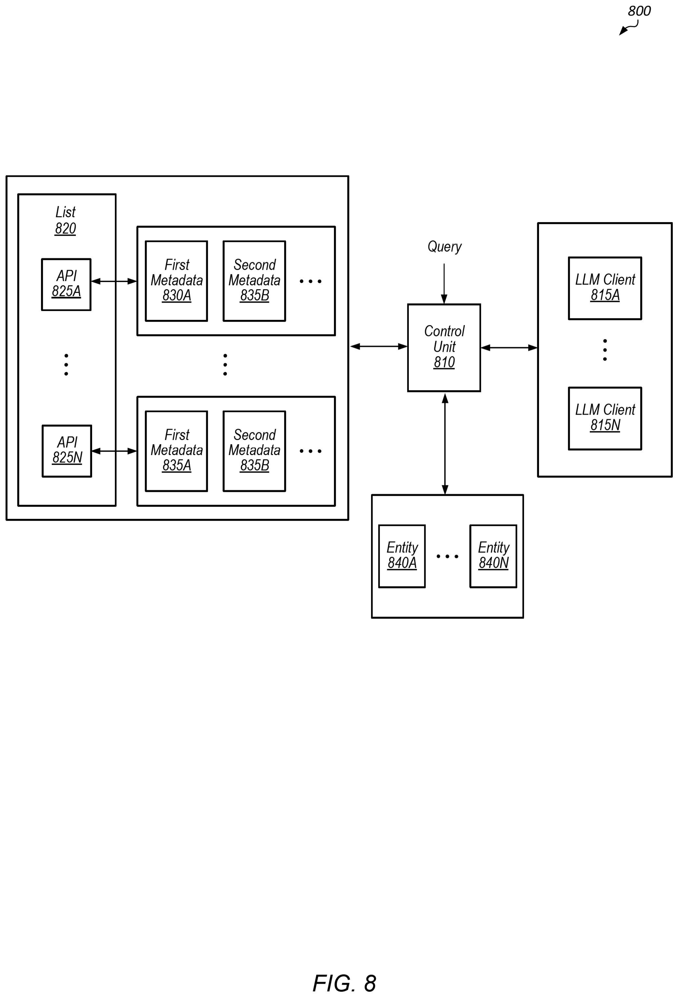

Turning now to FIG. 8, a block diagram of an integration layer 800 for generating API calls on-the-fly is depicted, in accordance with one or more embodiments of the current subject matter. In an example, integration layer 800 includes at least control unit 810, LLM clients 815A-815N, list 820 of activated APIs 825A-825N, corresponding first metadata 830A-830B and second metadata 835A-835B, and entities 840A-840N. Control unit 810 may be implemented using any suitable combination of hardware (e.g., processing units, programmable logic, application-specific integrated circuits) and software (e.g., program instructions). It is noted that the depiction of integration layer 800 is merely indicative of one particular embodiment. In other embodiments, integration layer 800 may include other components arranged in other suitable manners.

In an example, list 820 includes the activated APIs 825A-825N for a system landscape (e.g., customer system landscape 310 of FIG. 3). List 820 may include both standard APIs and custom APIs. Each API in list 820 includes corresponding metadata, with the corresponding metadata including at least first metadata and second metadata. For example, API 825A includes corresponding first metadata 830A and second metadata 835B, while API 825N includes corresponding first metadata 835A and second metadata 835B. The first metadata includes the description, the entities, the endpoints, the operations, and the semantics of the corresponding API. The second metadata includes the appropriate syntax for generating an API call to invoke the corresponding API based on entities extracted from a received query.

When the control unit 810 receives a query, control unit 810 may provide the query as an input to a first LLM client of LLM clients 815A-815N. The first LLM client may parse the query, extract one or more named entities from the query, and provide the one or more named entities as outputs. These named entities may be stored as entities 840A-840N. Next, the control unit 810 provides the named entities as inputs to a second LLM client of LLM clients 815A-815N. The control unit may also provide, as inputs to the second LLM client, list 820 of APIs 825A-825N and first metadata for each API in list 820. As a result of these inputs, second LLM client selects, from list 820, a given API to call in order to fulfill the query. Then, the control unit 810 provides, to a third LLM client of LLM clients 815A-815N, the named entities (extracted from the query) and the given API (selected by the second LLM client). Next, the third LLM client generates a given API call to be invoked to fulfill the query. The given API call will include the correct syntax for invoking the given API with the appropriate semantics based on the named entities extracted from the query. Finally, the control unit 810 invokes the given API with the given API call to complete the query.

It is noted that the second LLM client may be trained to select the appropriate API for fulfilling a query based on named entities, a list of APIs, and corresponding first metadata. It is also noted that the third LLM client may be trained to generate an API call for the appropriate API, where the API call has the proper syntax for fulfilling the query. The training of the second and third LLM clients may be performed in real-time, or the training of the second and third LLM clients may be performed ahead of time in a pre-processing step.

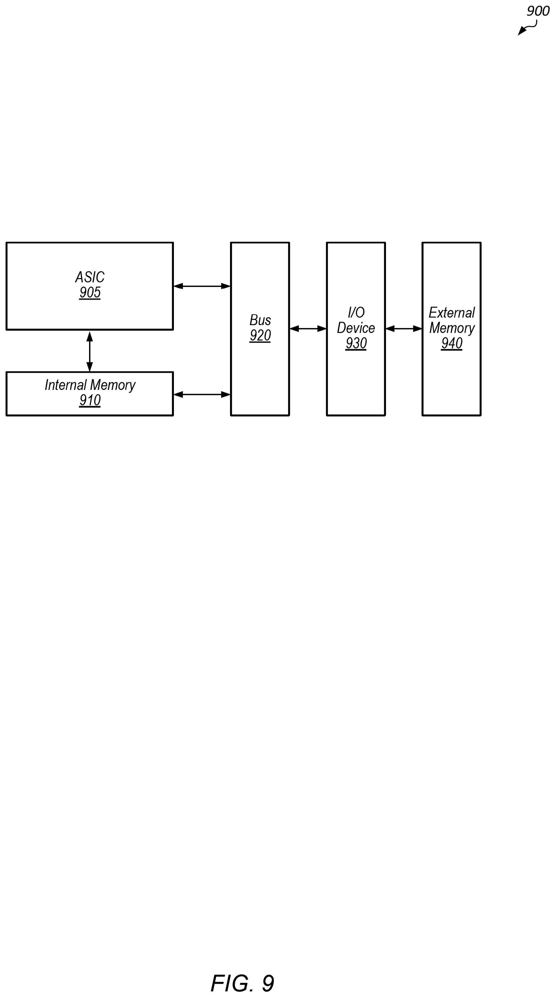

Referring now to FIG. 9, a block diagram of a system 900 for implementing one or more machine learning models is depicted, in accordance with one or more embodiments of the current subject matter. In one embodiment, system 900 may include at least application-specific integrated circuit (ASIC) 905, internal memory 910, bus 920, input/output (I/O) device 930, and external memory 940. System 900 may include other components which are not shown to avoid obscuring the figure. System 900 may be incorporated within a cloud platform (e.g., cloud platform 110) or as part of an organization's local computing environment on one or more servers.

ASIC 905 may be configured implement one or more machine learning models in accordance with the subject matter disclosed herein. Examples of machine learning models that may be implemented by ASIC 905 include, but are not limited to, LLMs, generative pre-trained transformers, neural networks, Generative Adversarial Networks (GANs), and other types of machine learning or artificial intelligence (AI) models. ASIC 905 is representative of any type of circuit or processing unit for implementing one or more machine learning models. In other embodiments, a graphics processing unit (GPU), a tensor processing unit (TPU), or another type of processing unit or circuit may be used in place of or in addition to ASIC 905.

In one embodiment, ASIC 905 includes a plurality of neurons organized in a plurality of layers with neurons from one layer connected to neurons from a subsequent layer optionally with logic circuits for altering, adjusting, and/or applying mathematical functions to the values of the neurons before connecting to the subsequent layer. In an example, the plurality of neurons are organized in an array where each neuron comprises a register (e.g., flip-flop), an input connection, and an output connection. ASIC 905 may be coupled to internal memory 910 for storing input and output values. ASIC 905 and internal memory 910 are coupled to bus 920 which is coupled to I/O device 930. I/O device 930 may be coupled to any number of components including external memory 940. In an example, external memory 940 may have a larger capacity than internal memory 910. Additionally, in an example, external memory 940 may have a slower access capability as compared to internal memory 910 which may be accessed with a relatively higher data rate.

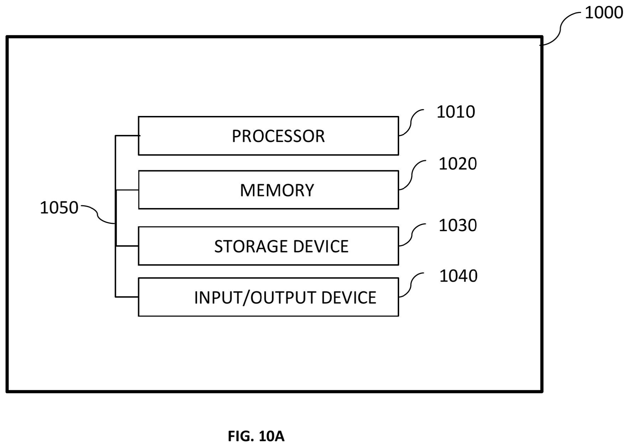

In some implementations, the current subject matter may be configured to be implemented in a system 1000, as shown in FIG. 10A. The system 1000 may include a processor 1010, a memory 1020, a storage device 1030, and an input/output device 1040. Each of the components (e.g., the processor 1010, the memory 1020, the storage device 1030, the I/O device 1040) may be interconnected using a system bus 1050. The processor 1010 may be configured to process instructions for execution within the system 1000. In some implementations, the processor 1010 may be a single-threaded processor. In alternate implementations, the processor 1010 may be a multi-threaded processor. The processor 1010 may be further configured to process instructions stored in the memory 1020 or on the storage device 1030, including receiving or sending information through the input/output device 1040. The memory 1020 may store information within the system 1000. In some implementations, the memory 1020 may be a computer-readable medium. In alternate implementations, the memory 1020 may be a volatile memory unit. In yet some implementations, the memory 1020 may be a non-volatile memory unit. The storage device 1030 may be capable of providing mass storage for the system 1000. In some implementations, the storage device 1030 may be a computer-readable medium. In alternate implementations, the storage device 1030 may be a floppy disk device, a hard disk device, an optical disk device, a tape device, non-volatile solid state memory, or any other type of storage device. The input/output device 1040 may be configured to provide input/output operations for the system 1000. In some implementations, the input/output device 1040 may include a keyboard and/or pointing device. In alternate implementations, the input/output device 1040 may include a display unit for displaying graphical user interfaces.

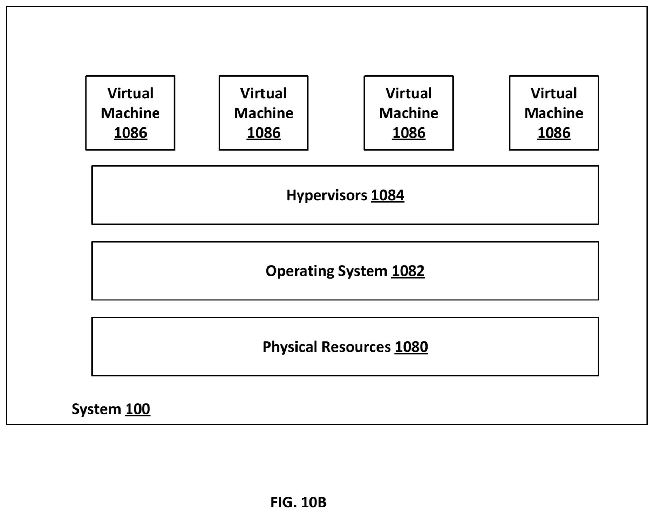

FIG. 10B depicts an example implementation of the system 100 (of FIG. 1). The system 100 may be implemented using various physical resources 1080, such as at least one or more hardware servers, at least one storage, at least one memory, at least one network interface, and the like. The system 100 may also be implemented using infrastructure, as noted above, which may include at least one operating system 1082 for the physical resources 1080 and at least one hypervisor 1084 (which may create and run at least one virtual machine 1086). For example, each multitenant application may be run on a corresponding virtual machine 1086.

The systems and methods disclosed herein can be embodied in various forms including, for example, a data processor, such as a computer that also includes a database, digital electronic circuitry, firmware, software, or in combinations of them. Moreover, the above-noted features and other aspects and principles of the present disclosed implementations can be implemented in various environments. Such environments and related applications can be specially constructed for performing the various processes and operations according to the disclosed implementations or they can include a general-purpose computer or computing platform selectively activated or reconfigured by code to provide the necessary functionality. The processes disclosed herein are not inherently related to any particular computer, network, architecture, environment, or other apparatus, and can be implemented by a suitable combination of hardware, software, and/or firmware. For example, various general-purpose machines can be used with programs written in accordance with teachings of the disclosed implementations, or it can be more convenient to construct a specialized apparatus or system to perform the required methods and techniques.

Although ordinal numbers such as first, second and the like can, in some situations, relate to an order; as used in a document ordinal numbers do not necessarily imply an order. For example, ordinal numbers can be merely used to distinguish one item from another. For example, to distinguish a first event from a second event, but need not imply any chronological ordering or a fixed reference system (such that a first event in one paragraph of the description can be different from a first event in another paragraph of the description).

The foregoing description is intended to illustrate but not to limit the scope of the invention, which is defined by the scope of the appended claims. Other implementations are within the scope of the following claims.

These computer programs, which can also be referred to programs, software, software applications, applications, components, or code, include program instructions (i.e., machine instructions) for a programmable processor, and can be implemented in a high-level procedural and/or object-oriented programming language, and/or in assembly/machine language. As used herein, the term "machine-readable storage medium" refers to any computer program product, apparatus and/or device, such as for example magnetic discs, optical disks, memory, and Programmable Logic Devices (PLDs), used to provide machine instructions and/or data to a programmable processor, including a machine-readable storage medium that receives program instructions as a machine-readable signal. The term "machine-readable signal" refers to any signal used to provide machine instructions and/or data to a programmable processor. The machine-readable storage medium can store such program instructions non-transitorily, such as for example as would a non-transient solid state memory or a magnetic hard drive or any equivalent storage medium. The machine-readable storage medium can alternatively or additionally store such machine instructions in a transient manner, such as would a processor cache or other random access memory associated with one or more physical processor cores.

To provide for interaction with a user, the subject matter described herein can be implemented on a computer having a display device, such as for example a cathode ray tube (CRT) or a liquid crystal display (LCD) monitor for displaying information to the user and a keyboard and a pointing device, such as for example a mouse or a trackball, by which the user can provide input to the computer. Other kinds of devices can be used to provide for interaction with a user as well. For example, feedback provided to the user can be any form of sensory feedback, such as for example visual feedback, auditory feedback, or tactile feedback; and input from the user can be received in any form, including acoustic, speech, or tactile input.

The subject matter described herein can be implemented in a computing system that includes a back-end component, such as for example one or more data servers, or that includes a middleware component, such as for example one or more application servers, or that includes a front-end component, such as for example one or more client computers having a graphical user interface or a Web browser through which a user can interact with an implementation of the subject matter described herein, or any combination of such back-end, middleware, or front-end components. The components of the system can be interconnected by any form or medium of digital data communication, such as for example a communication network. Examples of communication networks include, but are not limited to, a local area network ("LAN"), a wide area network ("WAN"), and the Internet.

The computing system can include clients and servers. A client and server are generally, but not exclusively, remote from each other and typically interact through a communication network. The relationship of client and server arises by virtue of computer programs running on the respective computers and having a client-server relationship to each other.

In the descriptions above and in the claims, phrases such as "at least one of" or "one or more of" may occur followed by a conjunctive list of elements or features. The term "and/or" may also occur in a list of two or more elements or features. Unless otherwise implicitly or explicitly contradicted by the context in which it used, such a phrase is intended to mean any of the listed elements or features individually or any of the recited elements or features in combination with any of the other recited elements or features. For example, the phrases "at least one of A and B;" "one or more of A and B;" and "A and/or B" are each intended to mean "A alone, B alone, or A and B together." A similar interpretation is also intended for lists including three or more items. For example, the phrases "at least one of A, B, and C;" "one or more of A, B, and C;" and "A, B, and/or C" are each intended to mean "A alone, B alone, C alone, A and B together, A and C together, B and C together, or A and B and C together." Use of the term "based on," above and in the claims is intended to mean, "based at least in part on," such that an unrecited feature or element is also permissible.

In view of the above-described implementations of subject matter this application discloses the following list of examples, wherein one feature of an example in isolation or more than one feature of said example taken in combination and, optionally, in combination with one or more features of one or more further examples are further examples also falling within the disclosure of this application:
Example 1: A computer-implemented method comprising: receiving a query from a first computing device; parsing, by a first trained machine learning (ML) model, the query to retrieve one or more semantic entities; training a second ML model with a list of application programming interfaces (APIs) and corresponding first data to generate a second trained ML model; providing the one or more semantic entities as inputs to the second trained ML model; selecting, by the second trained ML model based on receiving the one or more semantic entities as inputs, a given API from the list of APIs; training a third ML model with the given API and corresponding second metadata to generate a third trained ML model; providing the given API and the one or more semantic entities as inputs to the third trained ML model; generating, by the third trained ML model, a given API call for invoking the given API; and executing the given API call and completing the query to a first computing system based on the invoked given API.
Example 2: The computer-implemented method of Example 1, further comprising determining one or more data objects targeted by the query based on the one or more semantic entities.
Example 3: The computer-implemented method of any of Examples 1-2, wherein the second trained ML model is configured to map the one or more data objects targeted by the query to the given API.
Example 4: The computer-implemented method of any of Examples 1-3, further comprising completing the query to retrieve the one or more data objects from the first computing system.
Example 5: The computer-implemented method of any of Examples 1-4, further comprising rendering and displaying, in a user interface of the first computing device, one or more graphical elements corresponding to the one or more data objects.
Example 6: The computer-implemented method of any of Examples 1-5, wherein the list of APIs comprises standard APIs and custom APIs.
Example 7: The computer-implemented method of any of Examples 1-6, wherein the first computing system is a database system.
Example 8: The computer-implemented method of any of Examples 1-7, wherein the first computing system is an enterprise resource planning (ERP) system.
Example 9: The computer-implemented method of any of Examples 1-8, wherein the first data is metadata associated with each API of the list of APIs.
Example 10: The computer-implemented method of any of Examples 1-9, further comprising inserting, by the third trained ML model, a first semantic entity into the given API call.
Example 11: A system comprising: at least one processor; and at least one memory storing instructions that, when executed by the at least one processor, cause operations comprising: receiving a query from a first computing device; parsing the query to retrieve one or more semantic entities; determining one or more data objects targeted by the query based on the one or more semantic entities; mapping the one or more data objects to at least a first application programming interface (API) from a plurality of APIs; generating a first API call to invoke the first API to a first computing system; and completing the query to a first computing system based on the generated first API call.
Example 12: The system of Example 11, wherein the operations further comprise completing the query to retrieve the one or more data objects from the first computing system.
Example 13: The system of any of Examples 11-12, wherein the operations further comprise rendering and displaying, in a user interface of the first computing device, one or more graphical elements corresponding to the one or more data objects.
Example 14: The system of any of Examples 11-13, wherein the plurality of APIs comprises standard APIs and custom APIs.
Example 15: The system of any of Examples 11-14, wherein the first computing system is a database system.
Example 16: The system of any of Examples 11-15, wherein the first computing system is an enterprise resource planning (ERP) system.
Example 17: The system of any of Examples 11-16, wherein the operations further comprise mapping the one or more data objects to at least the first API from the plurality of APIs based on metadata associated with the first API.
Example 18: The system of any of Examples 11-17, wherein the operations further comprise inserting a first semantic entity into the first API call.
Example 19: The system of any of Examples 11-18, wherein the first semantic entity is inserted into the first API call according to a format associated with the first API.
Example 20: A non-transitory computer readable storage medium storing instructions, which when executed by at least one data processor, result in operations comprising: receiving a query from a first computing device; parsing, by a first trained machine learning (ML) model, the query to retrieve one or more semantic entities; training a second ML model with a list of application programming interfaces (APIs) and corresponding first data to generate a second trained ML model; providing the one or more semantic entities as inputs to the second trained ML model; selecting, by the second trained ML model based on receiving the one or more semantic entities as inputs, a given API from the list of APIs; training a third ML model with the given API and corresponding second metadata to generate a third trained ML model; providing the given API and the one or more semantic entities as inputs to the third trained ML model; generating, by the third trained ML model, a given API call for invoking the given API; and executing the given API call and completing the query to a first computing system based on the invoked given API.

The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and sub-combinations of the disclosed features and/or combinations and sub-combinations of several further features disclosed above. In addition, the logic flows depicted in the accompanying figures and/or described herein do not necessarily require the particular order shown, or sequential order, to achieve desirable results. Other implementations can be within the scope of the following claims.

## Claims

1. A computer-implemented method comprising:
receiving a query from a first computing device;
parsing, by a first trained machine learning (ML) model, the query to retrieve one or more semantic entities;
training a second ML model with a list of application programming interfaces (APIs) and corresponding first data to generate a second trained ML model;
providing the one or more semantic entities as inputs to the second trained ML model;
selecting, by the second trained ML model based on receiving the one or more semantic entities as inputs, a given API from the list of APIs;
training a third ML model with the given API and corresponding second metadata to generate a third trained ML model;
providing the given API and the one or more semantic entities as inputs to the third trained ML model;
generating, by the third trained ML model, a given API call for invoking the given API; and
executing the given API call and completing the query to a first computing system based on the invoked given API.

2. The computer-implemented method of claim 1, further comprising determining one or more data objects targeted by the query based on the one or more semantic entities,
wherein, optionally, the second trained ML model is configured to map the one or more data objects targeted by the query to the given API.

3. The computer-implemented method of claim 2, further comprising:
completing the query to retrieve the one or more data objects from the first computing system; and/or
rendering and displaying, in a user interface of the first computing device, one or more graphical elements corresponding to the one or more data objects.

4. The computer-implemented method of any one of claims 1 to 3, wherein the list of APIs comprises standard APIs and custom APIs; and/or
wherein the first computing system is a database system; and/or
wherein the first computing system is an enterprise resource planning (ERP) system; and/or
wherein the first data is metadata associated with each API of the list of APIs.

5. The computer-implemented method of any one of claims 1 to 4, further comprising inserting, by the third trained ML model, a first semantic entity into the given API call.

6. A system comprising:
at least one processor; and
at least one memory storing instructions that, when executed by the at least one processor, cause operations comprising:
receiving a query from a first computing device;
parsing the query to retrieve one or more semantic entities;
determining one or more data objects targeted by the query based on the one or more semantic entities;
mapping the one or more data objects to at least a first application programming interface (API) from a plurality of APIs;
generating a first API call to invoke the first API to a first computing system; and
completing the query to the first computing system based on the generated first API call.

7. The system of claim 6, wherein the operations further comprise completing the query to retrieve the one or more data objects from the first computing system.

8. The system of claim 6 or 7, wherein the operations further comprise rendering and displaying, in a user interface of the first computing device, one or more graphical elements corresponding to the one or more data objects.

9. The system of any one of claims 6 to 8, wherein the plurality of APIs comprises standard APIs and custom APIs.

10. The system of any one of claims 6 to 9, wherein the first computing system is a database system.

11. The system of any one of claims 6 to 10, wherein the first computing system is an enterprise resource planning (ERP) system.

12. The system of any one of claims 6 to 11, wherein the operations further comprise mapping the one or more data objects to at least the first API from the plurality of APIs based on metadata associated with the first API.

13. The system of any one of claims 6 to 12, wherein the operations further comprise inserting a first semantic entity into the first API call.

14. The system of claim 13, wherein the first semantic entity is inserted into the first API call according to a format associated with the first API.

15. A non-transitory computer readable storage medium storing instructions, which when executed by at least one data processor, result in operations comprising:
receiving a query from a first computing device;
parsing, by a first trained machine learning (ML) model, the query to retrieve one or more semantic entities;
training a second ML model with a list of application programming interfaces (APIs) and corresponding first data to generate a second trained ML model;
providing the one or more semantic entities as inputs to the second trained ML model;
selecting, by the second trained ML model based on receiving the one or more semantic entities as inputs, a given API from the list of APIs;
training a third ML model with the given API and corresponding second metadata to generate a third trained ML model;
providing the given API and the one or more semantic entities as inputs to the third trained ML model;
generating, by the third trained ML model, a given API call for invoking the given API; and
executing the given API call and completing the query to a first computing system based on the invoked given API.
